Europäisches Patentamt

European Patent Office

Office européen des brevets

(11) Numéro de publication: **0 313 433**
**A1**

## (12) DEMANDE DE BREVET EUROPEEN

(21) Numéro de dépôt: **88402539.6**

(22) Date de dépôt: **07.10.88**

(51) Int. Cl.4: **C 01 B 25/45**

(30) Priorité: **21.10.87 FR 8714520**

(43) Date de publication de la demande:
**26.04.89 Bulletin 89/17**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Michel, Paul**
**74, boulevard des Belges**
**F-69006 Lyon (FR)**

(74) Mandataire: **Dubruc, Philippe et al**
**RHONE-POULENC INTERSERVICES Service Brevets**
**Chimie 25, quai Paul-Doumer**
**F-92408 Courbevoie Cédex (FR)**

(54) **Procédé de préparation de phosphates acides d'aluminium et de sodium cristallisés.**

(57) L'invention a trait à un procédé de préparation d'un phosphate acide d'aluminium et de sodium cristallisé répondant à la formule générale

$$Na_a\ Al_b\ H_c\ (PO_4)_d,\ n\ H_2O$$

dans laquelle a, b, c, d et n sont des nombres respectivement compris inclusivement entre les intervalles 0,6 et 3,3 ; 1,8 et 3,3 ; 12 et 16 ; 7 et 9 ; 0 et 5, en respectant la relation $a + 3b + c = 3\ d$, caractérisé en ce qu'il consiste à pulvériser une solution précurseur dudit phosphate acide sur un lit agité de particules solides.

Ledit procédé s'applique particulièrement bien à la fabrication du composé cristallisé de formule $Na\ Al_3\ H_{14}\ (PO_4)_8,\ 4H_2O$.

EP 0 313 433 A1

Bundesdruckerei Berlin

## Description

### PROCEDE DE PREPARATION DE PHOSPHATES ACIDES D'ALUMINIUM ET DE SODIUM CRISTALLISES

La présente invention a trait à un procédé de préparation de phosphates acides d'aluminium et de sodium cristallisés répondant à la formule générale :
$Na_a Al_b H_c (PO_4)_d, n H_2O$
dans laquelle a, b, c, d et n sont des nombres respectivement compris inclusivement entre 0,6 et 3,3 ; 1,8 et 3,3 ; 12 et 16 ; 7 et 9 ; 0 et 5, en respectant la relation $a + 3b + c = 3 d$.

Les phospates acides d'aluminium et de sodium (SAP) sont des composés bien connus qui ont trouvé ces dernières années un large débouché dans l'industrie alimentaire.

Ils sont utilisés notamment comme levures à effet retard pour un certains nombre de produits de boulangerie et/ou de patisserie, comme additifs pour régulariser la fusion des fromages et comme additifs de fixation des graisses dans les viandes.

Le composé de formula $Na Al_3 H_{14} (PO_4)_8, 4H_2O$ est actuellement celui qui présente la plus grande importance industrielle, puisque reconnu et approuvé depuis de nombreuses années en tant que levure acide courante dans la cuisson des pâtes levées.

On connaît à l'heure actuelle deux procédés principaux de préparation de SAP cristallisés.

Le premier, décrit notamment dans le brevet US-A-2 550 490, est un procédé de type discontinu plus connu sous le nom de "procédé voie méthanol", qui consiste à concentrer puis à cristalliser une solution précurseur du SAP désiré jusqu'à l'obtention d'une bouillie très visqueuse contenant des cristaux de SAP, puis à séparer par filtration lesdits cristaux du milieu de cristallisation et ceci grâce à une remise en suspension préalable au moyen d'un ajout de méthanol.

Ce procédé présente deux inconvénients majeurs ; d'une part, il fait appel à du méthanol, composé hautement inflammable et toxique, ce qui impose des étapes de purification ultérieures, et d'autre part, il nécessite un équipement d'agitation puissant et très coûteux, du fait des variations extrêmes de la viscosité du milieu en cours d'opération.

Le deuxième décrit dans le brevet US-A- 3 311 448 et connu sous le nom de " procédé Kneadermaster ", repose sur un procédé de cristallisation continu utilisant des zones séparées pour la réaction puis la cristallisation de la solution précurseur.

Pratiquement, ces deux étapes sont réalisées en continu dans les appareils du type convoyeur-malaxeur, maintenus à hautes températures, la solution précurseur entrant à l'une des extrémités de l'appareil et le SAP cristallisé sortant alors à l'autre extrémité.

Malheureusement, la mise en oeuvre industrielle de ce procédé nécessite des investissements importants au niveau de l'appareillage qui est à la fois volumineux, coûteux et gros consommateur d'énergie, ce qui constitue à l'évidence un frein économique sérieux à l'utilisation de cette technique.

Par ailleurs, l'un et l'autre des procédés ci-dessus présentent l'inconvénient d'être d'un contrôle délicat, et ils conduisent en conséquence difficilement à des produits finaux de qualité constante.

Par qualité, on entend ici principalement d'une part la stoechiométrie (et plus particulièrement le nombre de molécules d'eau de cristallisation) et d'autre part le taux de cristallisation du produit obtenu.

Ce dernier paramètre, entre autres, a une grande importance sur le plan des propriétés d'usage du SAP. Ainsi, d'une manière générale, on observe d'une part qu'un SAP parfaitement cristallisé présente les meilleurs propriétés de réaction à effet retard avec le bicarbonate lorsqu'il est utilisé comme levure, et d'autre part qu'il est très faiblement hygroscopique, ce qui évite des problèmes de reprise en masse toujours génants au plan industriel lors du stockage et/ou de la manipulation des produits.

C'est d'ailleurs pour lutter contre les mauvaises propriétés hygroscopiques (donc de la mauvaise cristallinité) des SAP obtenus par les procédés classiques décrits ci-dessus, que l'on a été amené dans l'art antérieur à introduire dans ces produits des éléments stabilisants, tels que le potassium, ce qui bien entendu occasionne un surcoût de fabrication.

La présente invention a donc pour but de résoudre tous les problèmes ci-dessus et de proposer des moyens simples, efficaces, économiques et de mise en oeuvre aisée, pour obtenir de manière fiable et reproductible des phosphates acides d'aluminium et de sodium parfaitement cristallisés et de stoechiométrie constante.

A cet effet, la Demanderesse a mis au point un procédé nouveau de préparation de phosphates acides d'aluminium et de sodium cristallisés répondant à la formule générale :
$Na_a Al_b H_c (PO_4)_d, n H_2O$
dans laquelle a, b, c, d et n sont des nombres respectivement compris, inclusivement, dans les intervalles 0,6 - 3,3 ; 1,8 - 3,3 ; 12 - 16 ; 7 - 9 et 0 - 5, en respectant la relation $a + 3b + c = 3 d$, procédé caractérisé en ce qu'il consiste à pulvériser une solution précurseur dudit phosphate acide sur un lit agité de particules solides.

Globalement, dans son principe, l'invention consiste donc à enrober en continu par de fines gouttelettes formées par pulvérisation, des supports (particules) maintenus en agitation constante, la fonction desdits supports étant d'assurer le séchage et la cristallisation des gouttelettes déposées à leur surface ; le solvant s'évapore tandis que l'extrait sec se superpose par couches successives à la surface du support en constituant ainsi le produit désiré.

Mais, l'invention sera mieux comprise à la lecture de la description qui va suivre et des exemples concrets, mais non limitatifs, relatifs à sa mise en oeuvre.

La préparation de la solution précurseur de départ ne pose pas de problème particulier et peut être réalisée par tout moyen bien connu de l'homme de l'art dans ce domaine.

Fondamentalement, la plupart des procédés connus et convenant tout à fait dans le cas présent, consiste à faire réagir un composé du sodium (soude, carbonate, hydrogénocarbonate, etc...) et un composé d'aluminium trivalent (alumine, hydroxyde, etc...) avec de l'acide phosphorique aqueux maintenu entre sensiblement la température ambiante et son point d'ébullition, les proportions entre les divers réactifs au sein de la solution de départ étant ajustées classiquement en fonction de la stoechiométrie désirée dans le produit final.

Il est également possible de préparer cette solution de départ en faisant réagir une solution aqueuse de phosphate acide d'aluminium avec un composé du sodium, comme indiqué dans le brevet US-A- 3 501 314, cité ici à titre de référence.

La solution ainsi préparée est alors pulvérisée, c'est à dire transformée en une multitude de fines gouttelettes. Cette pulvérisation peut être réalisée par tout moyen connu en soi, notamment par une buse de pulvérisation du type pomme d'arrosoir ou autre. Sur les diverses techniques de pulvérisation susceptibles d'être mises en oeuvre dans le présent procédé, on pourra se reporter notamment à l'ouvrage de référence de MASTERS intitulé "SPRAY-DRYING" (deuxième édition, 1976, éditions George Goldwin - London).

Conformément à l'invention, la pulvérisation se fait sur un lit agité de particules solides.

Par lit agité, on entend ici un ensemble de particules maintenues en mouvement les unes par rapport aux autres, et ceci par tout moyen convenable, mécanique ou autre.

La température du lit doit être bien entendu suffisante pour assurer le séchage et la cristallisation des gouttelettes obtenues par pulvérisation. Pratiquement, cette température est généralement comprise entre $50^0$ et $150^0$C, de préférence comprise entre $60^0$ et $100^0$C.

Un mode particulièrement pratique de mise en oeuvre du procédé selon l'invention consiste à utiliser la technique dite des lits fluidisés par courant gazeux.

Selon cette technique, on introduit dans un réacteur des particules solides qui sont alors mises en expansion, et maintenues dans cet état, au moyen d'un courant gazeux arrivant généralement à la base du réacteur.

Dans le cas de la présente invention, on utilise alors de préférence un courant d'air chaud de manière à ce que les fonctions de mise en expansion d'une part et de chauffage du lit agité d'autre part, soient simultanément remplies par le même agent.

La température du courant gazeux entrant est alors généralement comprise entre $100^0$ et $180^0$C et celle du courant gazeux sortant entre $50^0$C et $150^0$C, ces températures étant bien entendu ajustées en fonction de considérations classiques de débits gazeux, de masse à mettre en suspension et de température de lit à atteindre.

On pulvérise alors en continu la solution précurseur décrite ci-avant sur ledit lit agité de particules, lesdites particules se trouvant alors enrobées progressivement par des couches successives de phosphate acide d'aluminium et de sodium cristallisé ou en cours de cristallisation.

Selon une caractéristique importante du procédé selon l'invention, on s'arrange pour que le temps de séjour moyen dans le réacteur d'une particule enrobée soit compris entre une et plusieurs heures, et ceci dans le but d'obtenir une cristallisation parfaite du phosphate désiré.

La nature des particules constituant le lit agité n'est pas critique ; ces particules doivent toutefois être inertes chimiquement vis à vis du phosphate acide désiré. Il peut ainsi s'agir de particules en verre, en métal ou en céramique, ou bien encore de particules constituées de cristaux du phosphate acide désiré.

Un mode particulier de mise en oeuvre du procédé selon l'invention peut alors être le suivant : de petites particules, en verre par exemple, sont introduites dans un réacteur puis fluidisées selon une technique telle que décrite ci-avant ; on pulvérise alors sur ces particules la solution précurseur du phosphate désiré puis on évacue de façon continue du lit fluidisé le produit enrobé ; l'enrobage, qui constitue la production, est alors éliminé de la surface des particules de verre par tout moyen connu en soi, par exemple par attrition, et les particules de verre ainsi débarassées sont introduites à nouveau dans le lit agité pour servir de support d'enrobage.

Le procédé fonctionne ainsi en continu.

Dans le cas plus particulier et préféré où l'on utilise des particules constituées de cristaux du phosphate acide désiré, les particules enrobées qui ont été évacuées du lit agité sont alors broyées et une partie de la poudre ainsi obtenue est envoyée à nouveau dans le lit agité pour servir de support d'enrobage, l'autre partie constituant la production. Là encore, le procédé fonctionne de manière continue.

Les poudres de phosphate acide d'aluminium et de sodium constituant la production peuvent éventuellement subir une étape de broyage supplémentaire destinée à les amener à une granulométrie rigoureuse.

L'analyse montre que, dans tous les cas, les poudres obtenues par le procédé selon l'invention sont parfaitement cristallisées, parfaitement homogènes en composition et sans écart à la stoechiométrie de la solution initiale.

Le procédé selon l'invention convient ainsi particulièrement bien à la préparation des phosphates cristallisés de formule
Na Al$_3$ H$_{14}$ (PO$_4$)$_8$ , 4H$_2$O.

Il est à signaler enfin qu'il peut être possible, si nécessaire, d'introduire dans les phosphates acides préparés selon l'invention certains agents destinés à diminuer encore très sensiblement leur caractère hygroscopique.

Ces agents sont bien connus de l'homme de l'art ; il s'agit notamment du potassium, du calcium ou de la silice.

Potassium et calcium peuvent être introduit soit lors de la préparation de la solution précurseur initiale (sous forme d'un hydroxyde, d'un carbonate, d'un hydrogénocarbonate, d'un phosphate, etc...) soit par mélange avec le phosphate acide obtenu en fin de procédé.

Quant à l'ajout de silice, il se fera en fin de procédé par mélange des poudres.

Les quantités d'agents dopants K et Ca éventuellement introduites doivent alors être telles que le produit final réponde à la formule globale suivante :
$Na_a K_x Ca_y Al_b H_c (PO_4)_d, n H_2O$
dans laquelle les indices a, b, c, d et n ont la signification donnée ci-avant, et les indices x, y et z représentent des nombres respectivement compris, inclusivement, dans les intervalles 0 - 0,2 ; 0 - 0,2 et 0 - 0,1 ; étant entendu que les indices ci-devant vérifient la relation de neutralité électrique globale.

Des exemples illustrant l'invention vont maintenant être donnés.

Exemple 1

Dans 1045,5 g d'acide phosphorique à 75 %, on ajoute 235,0 g d'une solution d'hydroxyde d'aluminium à 66,5 % $Al_2 O_3$ ; la suspension est chauffée à reflux sous agitation jusqu'à dissolution totale. La solution ainsi obtenue est refroidie à 50°. 84 g d'hydrogénocarbonate de sodium en solution dans 934 g d'eau sont alors ajoutés lentement sous agitation. On obtient une solution à 39,7 % d'extrait sec à 120°, qui est parfaitement limpide et stable pendant plusieurs mois à température ambiante.

Cette solution préchauffée à 50°, est pulvérisée à raison de 6 kg/h sur un lit fluidisé de particules de même composition, maintenu en expansion par un courant d'air chaud à 140°C. Après un temps de séjour moyen dans le réacteur de l'ordre de 2 heures, le produit obtenu sous forme de granulés non "poussiérants", à raison de 40 kg/h m², présente après broyage la particularité remarquable d'être parfaitement cristallisé, très faiblement hygroscopique et non collant.

L'analyse physicho-chimique est conforme à la structure cristalline $Na Al_3 H_{14} (PO_4)_8 , 4H_2O$.

Exemple 2

A 522,7 g d'acide phosphorique à 75 %, on ajoute dans l'ordre :
- 117.6 g d'hydroxyde d'aluminium $Al(HO)_3$ ; on agite et on chauffe à 108°C jusqu'à dissolution totale
- 2,55 g de carbonate de calcium $CaCO_3$.
- 5,06 g de bicarbonate de potassium en solution dans 93 g d'eau
- 33,6 g d'hydrogénocarbonate de sodium $naHCO_3$ en solution dans 373 g d'eau.

Après 1 heure d'agitation, on obtient un solution à 39,1 % d'extrait sec à 120°C, limpide et stable.

Cette solution est séchée dans les mêmes conditions que celles décrites dans l'exemple 1. Après broyage, la poudre obtenue présente une excellente tenue à l'humidité de l'air ambiant.

L'analyse par diffraction X montre que cette poudre est homogène et parfaitement cristallisée. Elle correspond d'autre part à la formule brute $Na_{0,8} K_{0,1} Ca_{0,05} Al_3 H_{14} (PO_4)_8 , 3,8 H_2O$.

Exemple 3

Dans cet exemple, on prépare le même produit que dans l'exemple 1.

A 1045,5 g d'acide phosphorique à 75 %, on ajoute dans l'ordre :
- 235,0 g d'Al$(OH)_3$ sous agitation et chauffage à reflux jusqu'à dissolution totale
- 26,6 g de carbonate de sodium $Na_2CO_3$ dissout dans 133 g d'eau
- 42 g d'hydrogénocarbonate de sodium $NaH CO_3$ dissout dans 467 g d'eau.

Après réaction, la solution est limpide et stable, son extrait sec à 120° s'élève à 48,1 % en poids.

Cette solution (d = 1,44), très visqueuse à température ambiante, est séchée dans les mêmes conditions que celles des exemples précédents, avec néanmoins une productivité améliorée.

L'analyse physico-chimique de la poudre obtenue après broyage montre que sa formule brute est :
$Na Al_3 H_{14} (PO_4)_8 , 4H_2O$.
sous une forme parfaitement cristallisée et non cellante.

Exemple 4

Cet exemple a pour but d'illustrer un autre mode de préparation possible pour la solution précurseur initiale.

On ajoute à 20,0 kg d'une solution de phosphate monoaluminique à 50 % d'extrait sec, chuaffée à reflux, 0,398 kg de $Al_2 O_3$.

Après dissolution, on refroidit à 50° et on ajoute à 0,625 kg de $Na_2 CO_3$. Après réaction, la solution obtenue est limpide et très visqueuse.

Cette solution préchauffée à 60°C est séchée comme dans l'exemple 1 sur un lit fluidisé de particules de même composition.

On obtient un produit homogène parfaitement cristallisé de formule brute :
$Na Al_{3,3} H_{13,2} (PO_4)_8 , 4,2 H_2O$.

**Revendications**

1. Procédé de préparation d'un phosphate acide d'aluminium et de sodium cristallisé répondant à la formule générale
$Na_a Al_b H_c (PO_4)_d, n H_2O$
dans laquelle a, b, c, d et n sont des nombres respectivement compris inclusivement entre les intervalles 0,6 et 3,3 ; 1,8 et 3,3 ; 12 et 16 ; 7 et 9 ; 0 et 5, en respectant la relation a + 3b + c = 3 d, caractérisé en ce qu'il consiste à pulvériser une solution précurseur dudit phosphate acide sur un lit agité de particules solides.

2. Procédé selon la revendication 1 caractérisé en ce que la température dudit lit agité est comprise entre 50° et 150°C.

3. Procédé selon la revendication 2 caractérisé en ce que ladite température est comprise entre 60° et 100°C.

4. Procédé selon l'une quelconque des revendications précédentes caractérisé en ce que ledit lit agité est obtenu par fluidisation des particules solides au moyen d'un courant gazeux.

5. Procédé selon la revendication 4 caractérisé en ce que ledit courant gazeux est un courant d'air chaud.

6. Procédé selon la revendication 5 caractérisé en ce que la température d'entrée dudit courant d'air chaud est comprise entre 100° et 180°C, et sa température de sortie est comprise entre 50° et 150°C.

7. Procédé selon l'une quelconque des revendications précédentes caractérisé en ce que lesdites particules solides sont de même composition que le phosphate acide à préparer.

8. Procédé selon l'une quelconque des revendications précédentes caractérisé en ce que la stoéchiométrie de la solution précurseur corresponde à l'obtention d'un phosphate acide d'aluminium et de sodium de formule $NaAl_3H_{14}(PO_4)_8,4H_2O$.

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | US-A-2 550 490  (G.A. McDONALD) --- | | C 01 B  25/45 |
| A | FR-A-1 372 977  (STAUFFER CHEMICAL CO.) * US-A-3 311 448 (Cat. D,A) * --- | | |
| D,A | US-A-3 501 314  (T.P. KICHLINE et al.) --- | | |
| A | US-A-4 375 456  (J.S.C. CHIANG) ----- | | |

DOMAINES TECHNIQUES
RECHERCHES (Int. Cl.4)

C 01 B  25/00

Le présent rapport a été établi pour toutes les revendications

| Lieu de la recherche | Date d'achèvement de la recherche | Examinateur |
|---|---|---|
| LA HAYE | 16-11-1988 | BREBION J.CH. |